# EUROPEAN PATENT SPECIFICATION

(11) **EP 3 504 743 B1**
(45) Date of publication and mention of the grant of the patent: **02.07.2025**
(21) Application number: 17842488.3
(22) Date of filing: 23.08.2017
(51) Int. Cl.: H01M 50/244, H01M 10/48

(54) **BATTERY SYSTEM**
BATTERIESYSTEM
SYSTÈME DE BATTERIE

(30) Priority: 23.08.2016 US 201662378588 P
(43) Date of publication of application: 03.07.2019
(73) Proprietor: Corvus Energy Holding AS, 5224 Nesttun (NO)
(72) Inventor: LINDSTROM, Jeremy, Richmond, British Columbia V6V 2A2 (CA); HANNA, Shawn, Richmond, British Columbia V6V 2A2 (CA); RONNE, Jerome, Richmond, British Columbia V6V 2A2 (CA)
(74) Representative: Acapo AS
(86) International application number: PCT/CA2017/050994
(87) International publication number: WO 2018/035608

(56) References cited:
- EP-A1- 2 658 027
- EP-A1- 2 693 519
- EP-A1- 2 975 670
- EP-A1- 3 449 526
- WO-A1-2017/181282
- US-A1- 2015 010 795
- US-A1- 2016 021 782
- US-A1- 2016 093 843
- US-A1- 2016 093 856

## Description

### Field of the Disclosure

The present disclosure relates to a battery system as typically used in the maritime industry. More particularly the disclosure relates to a battery system comprising one or more battery modules and a backplane, to a module power connector for a battery module, and to a backplane power connector for a backplane.

### Background to the Disclosure

One type of rechargeable battery is a lithium-ion battery, comprising a number of serially connected cells. The battery is typically housed in an enclosure to form a battery module. During normal operating conditions, electrical energy is converted to and stored as chemical energy during charging, and stored chemical energy is converted to electrical energy during discharging.

US 2016/093843 discloses for example already battery modules connected to a common backplane.

There are various problems with current racks for battery modules. Battery modules typically include positive and negative connectors on their front face, to which power cable assemblies are connected to form a string of modules terminating at a switchgear (or pack controller). Coolant inlet and outlet connections are typically also provided on the front face of the battery module. External flexible hoses connect these coolant fittings to external rigid pipes mounted on the front surfaces of the rack system. Such connections are often difficult and labour-intensive to install and service, are subject to poor manufacturing quality due to crimping issues, and still further are easy to miss-wire by the installer/servicer, which can lead to a short circuit. Furthermore, as the cables are often exposed on the front face of the rack they are subject to impact / mechanical damage from other equipment or activity. With the cabling exposed on the front face of the modules, battery packs are also at a risk of coolant leaks where coolant can spill onto the floor in the immediate area of the battery room leading to unsafe conditions.

With current battery packs, installation/servicing of a battery module is also a relatively involved process. In order to install or remove a module from the battery pack, connection / disassembly of all of the individual interfaces mentioned above is generally required until the module is free to be installed/removed from the rack.

Still further, multiple cable lengths are often required to accommodate the various physical arrangements of the battery modules. This can result in complex and excessively long power circuits. Often the power circuit will cross over itself with the cable jackets in contact with one another, leading to potential hot spots. The overall loop area formed as a result of the cabling can be large, potentially causing electromagnetic interference (EMI) issues.

Yet further, because of the high power output of such battery systems, the main power connectors are sometimes subject to overheating. It is common practice in the industry to regularly inspect the high voltage connectors to determine if they are overheating. This is typically done visually, for example by imaging the connectors using a commercially available infrared camera. This can be a time-consuming procedure, and it would be advantageous if improved, alternative methods of inspecting high voltage connectors were available.

The present disclosure seeks to address these and other needs in the art.

### Summary of the Disclosure

In a first aspect of the disclosure, there is provided a battery system comprising a backplane for engaging with one or more battery modules as defined in claim 1.

Each battery module may comprise more than one module power connector. Each module power connector and/or each backplane power connector may comprise one or more of the temperature-sensitive electronic components. The backplane may be coupled to a racking structure defining one or more battery bays, and moving the battery module into engagement with the backplane may comprise sliding the battery module into a battery bay until it engages with the backplane. A temperature-sensitive electronic component may comprise any component capable of measuring temperature, such as a temperature sensor, or may comprise a component which may be used to indirectly measure temperature. For example, the component may have a measurable property which changes as a function of temperature, and the measurable property may be monitored in order to derive temperature.

With the above battery system, monitoring of the temperature of the power connectors (either of the modules or of the backplane) may be carried out without the need to rely on infrared cameras or the like, by instead using temperature-sensitive electronic components disposed within thermally conductive distance of the module power connector and/or the backplane power connector. This may be particularly useful when a blind mate engagement is used, as described below, which can lead to the module and backplane power connectors being inaccessible when engaged to one another.

The module power connector may be configured to engage with the corresponding backplane power connector in a blind mate engagement. A blind mate engagement may be achieved by sliding a battery module into operational engagement with the backplane. Power connections may be formed when power pins (which may be comprised in the module power connector) at the rear of the battery module engage with power sockets (which may be comprised in the backplane power connector) secured within the backplane (or, in the reverse case, power pins in the backplane may engage with sockets in the battery module). The power sockets may each be connected to busbars such that, when all the battery modules are engaged with the backplane, a complete series string is formed, with both ends of the string (positive and negative) terminating at a power switchgear device, which may be referred to as a pack controller. The interconnecting busbars may be flexible to allow for slight misalignment of the module power connector relative to the backplane power connector, when engaging the two together, therefore allowing a correct fit with minimal force necessary to seat the connectors.

The module power connector and/or the corresponding backplane power connector may comprise one or more alignment features for guiding engagement of the module power connector with the corresponding backplane power connector such that, when moving the battery module into engagement with the backplane, the one or more alignment features may correct for at least some misalignment of the module power connector relative to the corresponding backplane power connector. The one or more alignment features may comprise one or more tapered portions provided on one or more of the module power connector and the backplane power connector.

The one or more temperature-sensitive electronic components may comprise one or more thermistors.

At least some of the one or more temperature-sensitive electronic components may be positioned on the module power connector.

At least some of the one or more temperature-sensitive electronic components may be positioned on the corresponding backplane power connector.

The module power connector and the corresponding backplane power connector may be inaccessible when the battery module is engaged with the backplane. In particular, in some embodiments it may not be possible, during engagement of the module and backplane power connectors, to visually locate the power connectors to assist in their alignment.

Each battery module may further comprise a module communication connector configured to engage with a corresponding backplane communication connector on the backplane. The module communication connector may be comprised in the module power connector, or may be a separate component to the module power connector. The backplane communication connector may be comprised in the backplane power connector, or may be a separate component to the backplane power connector.

The module communication connector and the corresponding backplane communication connector may comprise optical communication connectors. Each battery module may be configured to engage with the backplane in a blind mate engagement whereby the module communication connector is positioned within optically communicative distance of the corresponding backplane communication connector. In a battery module's operational position (i.e. when engaged with the backplane), optical connections may therefore be formed when optical ports in the module optical communication connector at the rear of the battery module come within sufficient proximity of optical ports in the corresponding backplane optical communication connector. In the operational position, a gap may be formed between the module communication connector and the corresponding backplane communication connector.

The optical medium is preferably inexpensive low-bandwidth light pipe material. The optical interface air gap is preferably small enough able to sufficiently tolerate misalignment such that generally no high-precision components or special alignment / calibration procedures are required to ensure correct alignment of the module optical communication connector with the backplane optical communication connector.

The module power connector and/or the corresponding backplane power connector may comprise one or more alignment features for guiding engagement of the module power connector with the corresponding backplane power connector such that, when moving the battery module into engagement with the backplane, the one or more alignment features correct for at least some misalignment of the module communication connector relative to the corresponding backplane communication connector. Thus, physically engaging the module power connectors with the backplane power connectors may be sufficient to bring the module communication connectors into communicative coupling with the backplane communication connectors. The communicative coupling may comprise a physical coupling (for example if electrical communication is being used) or alternatively may comprise a non-physical coupling, for example if optical communication is being used, as described above.

The battery system may further comprise a power switching device for interrupting power flow between the backplane and the one or more battery modules. The battery system may further comprise a pack controller configured, when a safety-disconnect condition is determined by the pack controller to be satisfied, to operate the power switching device so as to interrupt power flow between the backplane and the one or more battery modules. The pack controller may be configured to disconnect the one or more battery modules from a DC power bus, thereby interrupting power flow between the backplane and the one or more battery modules.

Each battery module may comprise a module controller configured to determine a power connector temperature of the module power connector and/or the corresponding backplane power connector, based on a change in temperature detected by the one or more temperature-sensitive electronic components. The module controller may comprise programmable logic such as one or more microprocessors and one or more memories cooperating together so as to carry out programmed instructions, such as software. In some embodiments, the module controller may comprise processing circuitry configured to carry out the methods described herein.

The one or more temperature-sensitive electronic components may comprise one or more thermistors. The module controller may be further configured to determine the power connector temperature based on an electrical resistance of the one or more thermistors. For example the power connector temperature may be determined based on a comparison of a reference electrical resistance electrically coupled to the module controller, and an electrical resistance of the one or more thermistors. The reference electrical resistance may be determined by a pull-down or pull-up resistor electrically coupled to the module controller.

The pack controller may be communicative with the module controller and may be further configured to determine the safety-disconnect condition has been satisfied if the power connector temperature is determined to exceed a preset temperature threshold.

The module controller may be further configured to communicate with the pack controller over a safety-disconnect loop. The module controller may be further configured to open the safety-disconnect loop if the power connector temperature is determined to exceed the preset temperature threshold, thereby preventing the module controller from communicating with the pack controller. The safety disconnect condition may be satisfied when the module controller is no longer communicating with the pack controller. The module controller may be configure to operate a relay or other switch-type device, such as an optical relay, in order to open/close the safety-disconnect loop.

The module controller may determine to no longer be communicating with the pack controller when the pack controller determines that the module controller has not communicated with the pack controller over the safety-disconnect loop for a predetermined amount of time.

The safety-disconnect loop may comprise an optical communication medium. The optical communication medium may comprise an optical fibre terminating at the backplane communication connector. Optical signals sent from the module controller to the pack controller may be transmitted through an air interface gap between the module communication connector and the backplane communication connector, via the one or more optical fibres, and may be detected by an optical receiver in the backplane communication connector, or in some other part of the backplane.

The module controller may be further configured to open the safety-disconnect loop if: a voltage of one or more cells in the battery module is determined to exceed a preset voltage threshold, the voltage being measured by a sensor electrically coupled to the module controller; a cell temperature of one or more cells in the battery module is determined to exceed a preset cell temperature threshold, the cell temperature being measured by a sensor electrically coupled to the module controller; or an ambient temperature of the battery module is determined to exceed a preset ambient temperature threshold, the ambient temperature being measured by a sensor electrically coupled to the module controller.

The module power connector may comprise module contacts and interlock contacts. The interlock contacts may be electrically coupled to the module controller and corresponding interlock contacts in the corresponding backplane power connector when the battery module is engaged with the backplane. The module controller may be further configured to open the safety-disconnect loop in response to the battery module being disengaged from the backplane.

The backplane power connector may comprise a jumper positioned such that, when the battery module is engaged with the backplane, the jumper is electrically coupled to the interlock contacts, and, when the battery module is disengaged from the backplane, the jumper is disconnected from the interlock contacts. The module controller may be further configured to open the safety-disconnect loop based on an electrical resistance across the interlock contacts. For example the module controller may be further configured to open the safety-disconnect loop by comparing of a reference electrical resistance electrically coupled to the module controller to an electrical resistance across the interlock contacts
The one or more temperature-sensitive electronic components may be: comprised in the module power connector and electrically coupled to the interlock contacts; comprised in the module power connector and electrically coupled to the module contacts; or comprised in the backplane power connector and electrically coupled to the jumper.

The one or more backplane power connectors may be movably coupled to the backplane. The one or more backplane connectors may be movably coupled to the backplane such that the one or more backplane connectors may be arranged to move laterally within a plane parallel to a plane defined by the backplane.

The backplane may further comprise a plurality of flexible busbars interconnecting adjacent backplane power connectors.

The backplane may comprise a rack for receiving the one or more battery modules. During engagement of the one or more battery modules with the rack, the rack may cooperate with the one or more battery modules such that movement of the one or more battery modules is constrained to a direction perpendicular to the backplane.

The pack controller may be further configured to: send over the safety-disconnect loop a sleep instruction to the module controller if a required power flow to/from the battery module is determined to be below a preset power threshold; and send over the safety-disconnect loop a wake-up instruction to the module controller if a required power flow to/from the battery module is determined to be above a preset power threshold. The module controller may be further configured to: operate in a low-power mode in response to receiving the sleep instruction; and operate in a normal mode in response to receiving the wake-up instruction.

In a further aspect of the disclosure, there is provided a module power connector for a battery module. The module power connector is configured to engage with a corresponding backplane power connector on a backplane, thereby forming a path for power flow between the battery module and the backplane. The module power connector comprises one or more temperature-sensitive electronic components configured to detect a change in temperature of the module power connector. The module power connector of the present aspect of the disclosure may be the module power connector described above in connection with the first aspect of the disclosure. Accordingly, the module power connector of the present aspect of the disclosure may comprise any of the features of the module power connector described above in connection with the first aspect of the disclosure.

In a further aspect of the disclosure, there is provided a backplane power connector for a backplane. The backplane power connector is configured to engage with a corresponding module power connector on a battery module, thereby forming a path for power flow between the battery module and the backplane. The backplane power connector comprises one or more temperature-sensitive electronic components configured to detect a change in temperature of backplane power connector. The backplane power connector of the present aspect of the disclosure may be the backplane power connector described above in connection with the first aspect of the disclosure. Accordingly, the backplane power connector of the present aspect of the disclosure may comprise any of the features of the backplane power connector described above in connection with the first aspect of the disclosure.

In a further aspect of the disclosure, there is provided a method of using a battery system. The method comprises providing a backplane comprising one or more backplane power connectors. The method further comprises providing one or more battery modules each comprising a module power connector configured to engage with a corresponding backplane power connector. The method further comprises providing one or more temperature-sensitive electronic components positioned within thermally conductive distance of, and configured to detect a change in temperature of, either, or both of, the module power connector and the corresponding backplane power connector. The method further comprises moving the one or more battery modules into engagement with the backplane such that each module power connector engages with a corresponding backplane power connector, thereby forming a path for power flow between the one or more battery modules and the backplane.

The engagement of each module power connector with a corresponding backplane power connector may comprise a blind mate engagement. Each module power connector and/or each corresponding backplane power connector may comprise one or more alignment features for guiding engagement of the module power connector with the corresponding backplane power connector such that, when moving the battery module into engagement with the backplane, the one or more alignment features correct for at least some misalignment of the module power connector relative to the corresponding backplane power connector.

According to the invention, there is provided a battery system comprising: a backplane for engaging with one or more battery modules, the backplane comprising one or more backplane optical communication connectors. The battery system further comprises one or more battery modules each comprising a module optical communication connector and each being configured to engage with the backplane by moving the battery module into engagement with the backplane such that the module optical communication connector engages with a corresponding backplane optical communication connector in a blind mate engagement. The battery system further comprises one or more optical fibres terminating at the one or more backplane optical communication connectors.

Each module optical communication connector may comprise one or more alignment features for guiding engagement of the module optical communication connector with the corresponding backplane optical communication connector such that, when moving the battery module into engagement with the backplane, the one or more alignment features correct for at least some misalignment of the module optical communication connector relative to the corresponding backplane optical communication connector.

Engagement of the one or more battery modules with the backplane may comprise the one or more battery modules being positioned relative to the backplane such that one or more module optical ports in each module optical communication connector are located within optically communicative distance of corresponding backplane optical ports in the corresponding backplane optical communication connector. A gap may be formed between the one or more module optical ports and the corresponding one or more backplane optical ports.

Each battery module may further comprise a module power connector configured to engage with the backplane by moving the battery module into engagement with the backplane such that the module power connector engages with a corresponding backplane power connector in the backplane. Each battery module may further comprise one or more temperature-sensitive electronic components positioned within thermally conductive distance of, and configured to detect a change in temperature of, either, or both of, the module power connector and the corresponding backplane power connector.

The one or more temperature-sensitive electronic components may comprise one or more thermistors.

At least some of the one or more temperature-sensitive electronic components may be positioned on the module power connector.

At least some of the one or more temperature-sensitive electronic components may be positioned on the corresponding backplane power connector.

The module power connector and the corresponding backplane power connector may be inaccessible when the battery module is engaged with the backplane.

The battery system may further comprise a power switching device for interrupting power flow between the backplane and the one or more battery modules, the battery system further comprising a pack controller configured, when a safety-disconnect condition is determined by the pack controller to be satisfied, to operate the switching device so as to interrupt power flow between the backplane and the one or more battery modules.

Each battery module may further comprise a module controller configured to determine a power connector temperature of the module power connector and/or the backplane power connector, based on a change in temperature detected by the one or more temperature-sensitive electronic components.

The one or more temperature-sensitive electronic components may comprise one or more thermistors. The module controller may be further configured to determine the power connector temperature based on an electrical resistance of the one or more thermistors. For example the power connector temperature may be determined based on a reference electrical resistance electrically coupled to the module controller, and an electrical resistance of the one or more thermistors.

The pack controller may be communicative with the module controller and may be further configured to determine the safety-disconnect condition has been satisfied if the power connector temperature is determined to exceed a preset temperature threshold.

The module controller may be configured to communicate with the pack controller over a safety-disconnect loop. The module controller may be further configured to open the safety-disconnect loop if the power connector temperature is determined to exceed the preset temperature threshold, thereby preventing the module controller from communicating with the pack controller. The safety disconnect condition may be satisfied when the module controller is no longer communicating with the pack controller.

The module controller may be determined to no longer be communicating with the pack controller when the pack controller determines that the module controller has not communicated with the pack controller over the safety-disconnect loop for a predetermined amount of time.

The safety-disconnect loop may comprise the one or more optical fibres.

The module controller may be further configured to open the safety-disconnect loop if: a voltage of one or more cells in the battery module is determined to exceed a preset voltage threshold, the voltage being measured by a sensor electrically coupled to the module controller; a cell temperature of one or more cells in the battery module is determined to exceed a preset cell temperature threshold, the cell temperature being measured by a sensor electrically coupled to the module controller; or an ambient temperature of the battery module is determined to exceed a preset ambient temperature threshold, the ambient temperature being measured by a sensor electrically coupled to the module controller.

The module power connector may comprise module contacts and interlock contacts. The interlock contacts may be electrically coupled to the module controller and corresponding interlock contacts in the corresponding backplane power connector when the battery module is engaged with the backplane. The module controller may be further configured to open the safety-disconnect loop in response to the battery module being disengaged from the backplane.

The corresponding backplane power connector may comprise a jumper positioned such that, when the battery module is engaged with the backplane, the jumper is electrically coupled to the interlock contacts, and, when the battery module is disengaged from the backplane, the jumper is disconnected from the interlock contacts. The module controller may be further configured to open the safety-disconnect loop based on an electrical resistance across the interlock contacts. For example, the module controller may be further configured to open the safety-disconnect loop by comparing a reference electrical resistance electrically coupled to the module controller to an electrical resistance across the interlock contacts.

The one or more temperature-sensitive electronic components are: comprised in the module power connector and electrically coupled to the interlock contacts; comprised in the module power connector and electrically coupled to the module contacts; or comprised in the corresponding backplane power connector and electrically coupled to the jumper.

The one or more backplane power connectors may be movably coupled to the backplane. The backplane may further comprise a plurality of flexible busbars interconnecting adjacent backplane power connectors.

The pack controller may be further configured to: send over the safety-disconnect loop a sleep instruction to the module controller if a required power flow to/from the battery module is determined to be below a preset power threshold; and send over the safety-disconnect loop a wake-up instruction to the module controller if a required power flow to/from the battery module is determined to be above a preset power threshold. The module controller may be further configured to: operate in a low-power mode in response to receiving the sleep instruction; and operate in a normal mode in response to receiving the wake-up instruction.

### Brief Description of the Drawings

Specific embodiments of the disclosure will now be described in conjunction with the accompanying drawings of which:
Figure 1 is a perspective view of a rack assembly according to an embodiment of the disclosure;
Figure 2 is a perspective view of the rack assembly of Figure 1, fully loaded with battery modules;
Figure 3A is a perspective view of a front face of a battery module according to an embodiment of the disclosure;
Figure 3B is a perspective view of a rear face of the battery module of Figure 3A;
Figure 4A is a perspective view of a module power connector in accordance with an embodiment of the disclosure;
Figure 4B is a perspective view of an opposite side of the module power connector of Figure 4A;
Figures 5A-5D are cross-sectional views of a module power connector engaging with a backplane power connector, in accordance with an embodiment of the disclosure;
Figure 6 is a cross-sectional view of an optical connection formed when a module power connector engages with a backplane power connector, in accordance with an embodiment of the disclosure;
Figure 7A is a circuit diagram of a battery module according to an embodiment of the disclosure;
Figure 7B is a circuit diagram of a battery pack according to an embodiment of the disclosure; and
Figure 8 is a circuit diagram of a battery module according to an embodiment of the disclosure.

### Detailed Description of Specific Embodiments

The present disclosure seeks to provide an improved battery system. Whilst various embodiments of the disclosure are described below, the disclosure is not limited to these embodiments, and variations of these embodiments may well fall within the scope of the disclosure which is to be limited only by the appended claims.

Directional terms such as "top", "bottom", "upwards", "downwards", "vertically" and "laterally" are used in this disclosure for the purpose of providing relative reference only, and are not intended to suggest any limitations on how any article is to be positioned during use, or to be mounted in an assembly or relative to an environment.

Additionally, the term "couple" and variants of it such as "coupled", "couples", and "coupling" as used in this disclosure are intended to include indirect and direct connections unless otherwise indicated. For example, if a first article is coupled to a second article, that coupling may be through a direct connection or through an indirect connection via one or more other articles.

Furthermore, the singular forms "a", "an", and "the" as used in this disclosure are intended to include the plural forms as well, unless the context clearly indicates otherwise.

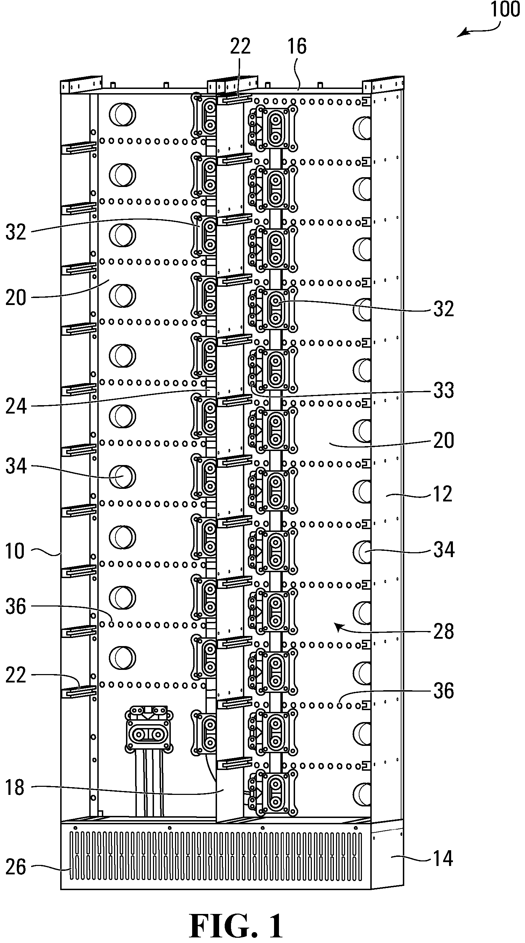

Turning to Figure 1, there is shown a rack assembly 100 in accordance with an embodiment of the present disclosure. Rack assembly 100 comprises side walls 10 and 12 joining a base 14 and a top 16. A dividing wall 18 extends from base 14 to top 16 and separates rack assembly 100 into a left-hand column and a right-hand column. Each column comprises multiple battery bays 20 for receiving battery modules. Each battery bay 20 is configured to receive or accept a single battery module though in other embodiments a battery bay may be configured to receive more than one battery module. Side walls 10, 12 and dividing wall 18 each comprise guiding members 22 for assisting proper alignment of battery modules during insertion of the battery modules into rack assembly 100. Base 14 houses an airflow chamber beneath battery bays 20. The front of base 14 is provided with a vented duct 26 to allow the passage of air.

Rack assembly 100 further comprises a backplane 28 defining a rear wall of rack assembly 100. The rear wall of rack assembly 100 is said to be on a battery module-receiving side of backplane 28. Backplane 28 forms a rear wall of each battery bay 20 and comprises a number of backplane power connectors 32 comprising backplane optical connectors 33, arranged to engage with or mate with corresponding module power ports/connectors and module optical ports/connectors on a battery module. Each battery bay 20 is therefore provided with a backplane power connector 32 and a backplane optical connector 33 for engaging with a battery module inserted within the battery bay. Backplane power connectors 32 and backplane optical connectors 33 are movably coupled to backplane 28, such that backplane power connectors 32 and backplane optical connectors 33 may move laterally slightly in the plane defined by backplane 28.

Flexible busbars 24 are provided to interconnect two adjacent backplane power connectors 32 such that electrical power may flow from one backplane power connector 32 to another. Because of their flexibility, during engagement of a battery module 38 with backplane 28, slight misalignment of battery module 38 will be corrected by the flexible busbars and the movable coupling of backplane power connectors 32 and backplane optical connectors 33 with backplane 28, allowing slight movement of backplane power connectors 32 relative to the battery module 38. The backplane power connector 32 at lower left is used to connect to a ship's DC bus. Backplane power connectors 32 and backplane optical connectors 33 are positioned proximate dividing wall 18.

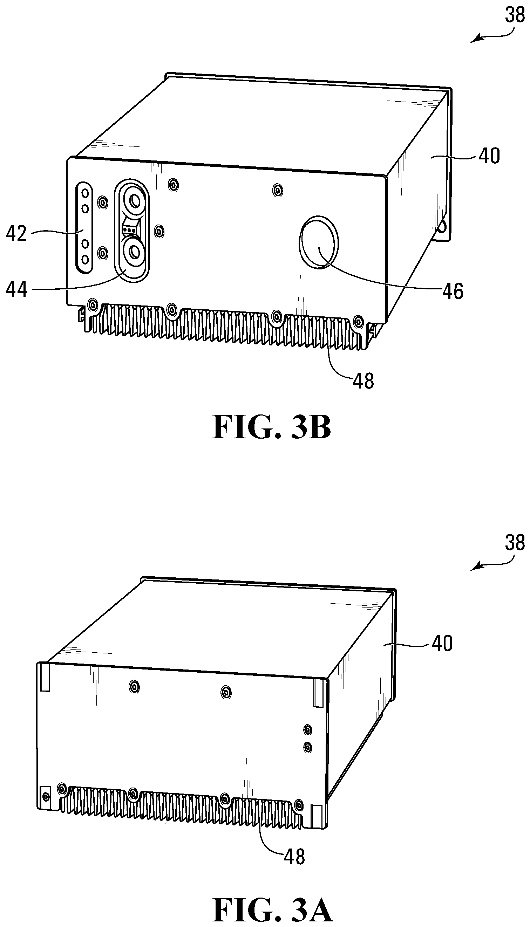

Figure 1 shows rack assembly 100 in an empty configuration. That is, in Figure 1 rack assembly 100 is shown without any battery modules installed. Battery module 38 such as that shown in Figures 3A and 3B may be used with rack assembly 100. Turning to Figures 3A and 3B, there is shown an embodiment of a battery module 38 that may installed in rack assembly 100. Figure 3A shows a front view of battery module 38 and Figure 3B shows a rear view of battery module 38. Battery module 38 houses (though not a shown) a number of cells disposed in a stacked arrangement within an enclosure 40. On the rear face of battery module 38 there are shown module optical communication ports 42, module power ports 44 and exhaust seal 46. Module optical communication ports 42 and module power ports 44 are comprised in a module power connector 200 (described in more detail below). Module optical communication ports 42 are positioned in a vertical alignment, as are module power ports 44. Module optical communication ports 42 and module power ports 44 form part of a module power/communication connector, described in more detail below. On the underside of battery module 38 is provided a heat sink 48 comprising a finned arrangement for assisting heat dissipation away from battery module 38.

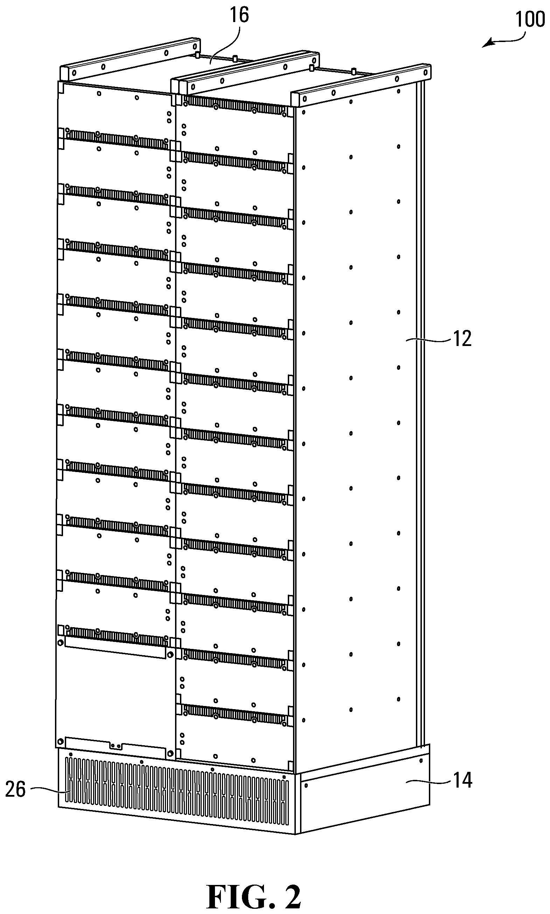

In use, battery modules (such as battery module 38) are installed in a rack assembly by sliding a battery module into a vacant battery bay of the rack assembly. A fully-filled rack assembly 100 is shown in Figure 2. Each battery bay 20 contains a battery module 38 inserted therein, each battery module being engaged with backplane 28. To mount a battery module 38 into rack assembly 100, battery module 38 is inserted rear face first into a vacant battery bay 20. Battery module 38 is inserted fully into battery bay 20 until reaching a mating position, wherein in the mating position module optical ports 42 and module power ports 44 (of battery module 38) blind matingly engage with corresponding ports in a backplane optical connector 33 and a backplane power connector 32 (of backplane 28), and exhaust seal 46 (of battery module 38) blind matingly engages with an exhaust port 34 (of backplane 28). Guiding members 22 assist with proper alignment of the battery module 38's ports relative to the corresponding ports on backplane 28.

As will be described in more detail below, alignment features provided on the module power/communication connector also assist in alignment of the battery module 38's ports relative to the corresponding ports on backplane 28.

As mentioned above, engagement of module optical ports 42 with a backplane optical connector 33, engagement of module power ports 44 with a backplane power connector 32, and engagement of exhaust seal 46 with an exhaust port 34 comprises a blind mate engagement. As known in the art, a blind mate engagement may be any engagement where self-aligning features on the connectors allow for slight misalignment during coupling/engagement of one connector to another. The self-aligning features assist in proper alignment of the connectors to ensure a proper engagement of the connectors. Engagement of module optical ports 42 with a corresponding backplane optical connector 33 means that module optical ports 42 are brought into optically communicative proximity of corresponding ports in backplane optical connector 33. With the blind mating described above, there is no need for a user to manually connect each battery module 38 to backplane 28. The optical and electrical engagement of each battery module 38 with backplane 28 is assured by the proper alignment of optical/power connectors 42/44 with optical/power connectors 33/32, and the proper alignment of exhaust seal 46 and exhaust port 34, on both the rear face of battery module 38 and on backplane 28.

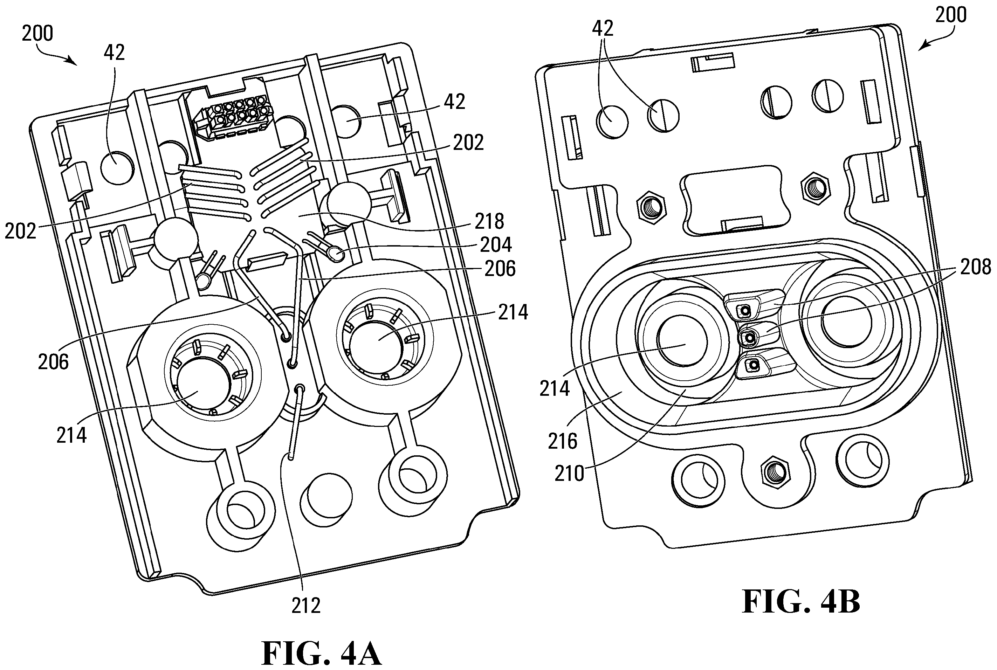

Turning to Figures 4A and 4B, there is shown in more detail a portion of module power/communication connector 200 in accordance with an embodiment of the disclosure. For clarity, module power/communication connector 200 will be referred to simply as module power connector 200. Module power connector 200 is used with battery module 38 as described in connection with Figures 3A and 3B, and is disposed on the rear side of battery module 38 (i.e. the side that engages with backplane 28).

Module power connector 200 comprises optical communication ports 42 for optical communication with corresponding ports on a backplane power connector of backplane 28, to which module power connector 200 is to be engaged. Module power connector 200 comprises thermistors 204 whose operation is described in more detail below. High Voltage Interlock Loop (HVIL) connections 206 extend from HVIL power ports 208 and, when module power connector 200 is engaged to backplane 28, to a local HVIL jumper (not shown). The operation of the HVIL is discussed in more detail below. Adjacent HVIL power ports 208 is a bonding/ground connection 212 connected to bonding/ground port 210. Adjacent HVIL and bonding/ground ports 208, 210 are battery connection pass-throughs 214 allowing the main battery module contacts to engage with corresponding contacts in the corresponding backplane power connector 32. Battery connection pass-throughs 214 form the outside of power ports 44 seen in Figure 3B. In the embodiment shown in Figures 4A and 4B, a blind mate interface PCB 218 is included. Blind mate interface PCB 218 provides a means of aggregating a number of signals, including those from HVIL connections 206 and thermistors 204, and directing those signals to an interface PCB connector.

The backplane-facing side of module power connector 200 is shown in Figure 4B. Surrounding battery connection pass-throughs 214 is a blind mate lead-in taper 216 allowing blind mate alignment of module power connector 200 with a corresponding backplane connector 32.

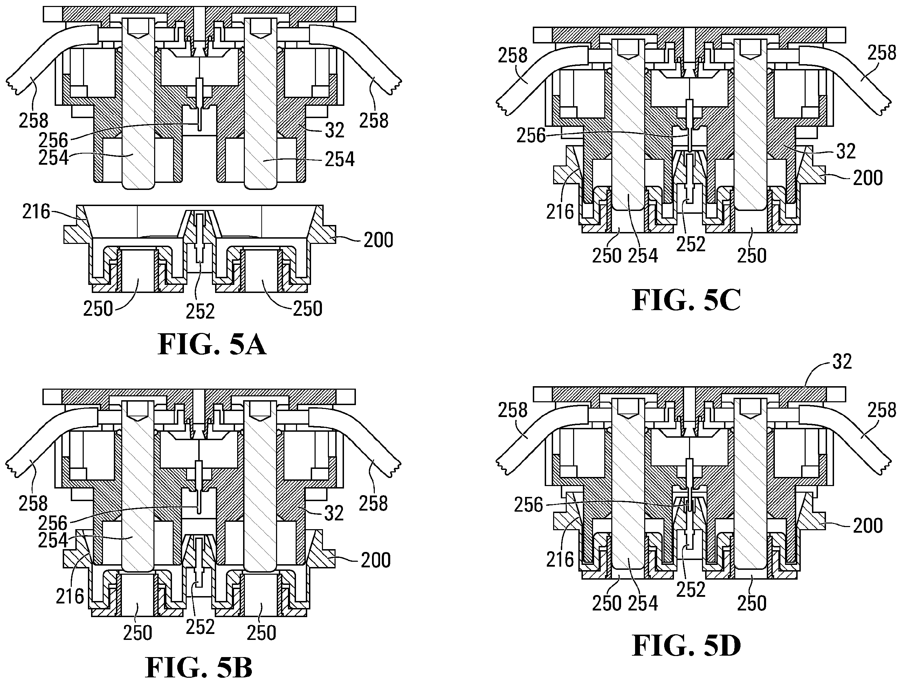

Now turning to Figures 5A-5D, there is shown module power connector 200 being brought into engagement with corresponding backplane power connector 32. Figure 5A shows module power connector 200 and backplane power connector 32 in an unmated position, Figure 5B shows module power connector 200 and backplane power connector 32 in an aligned position, Figure 5C shows module power connector 200 and backplane power connector 32 in a power mated position, and Figure 5D shows module power connector 200 and backplane power connector 32 in a fully mated position.

Module power connector 200 includes power sockets 250, HVIL socket 252 and blind mate lead-in taper 216. Backplane power connector 32 includes power pins 254 for insertion into power sockets 250, and HVIL jumper pin 256 for insertion into HVIL socket 252. During engagement of module power connector 200 with backplane power connector 32, power pins 254 are self-aligned with power sockets 250 by virtue of blind mate lead-in taper 216 interacting with backplane power connector 32. Flexible busbars 258 coupled to backplane power connector 32 may movably flex during engagement of module power connector 200 with backplane power connector 32, thereby causing backplane power connector 32 to move relative to backplane 28 and assist with the alignment of backplane power connector 32 with module power connector 200.

In Figure 5C, power pins 254 are shown in electrical contact with power sockets 250, and in Figure 5D module power connector 200 and backplane power connector 32 are shown fully engaged or mated, with HVIL jumper 256 electrically coupled with HVIL socket 252. During disengagement of module power connector 200 from backplane power connector 32, HVIL jumper 256 disengages from HVIL socket 252 before power pins 254 disengage from power sockets 250.

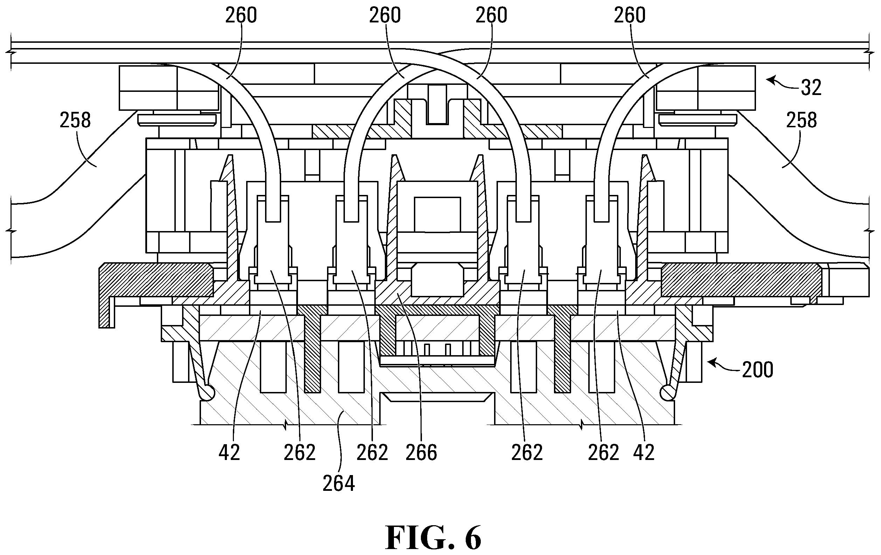

Turning to Figure 6, there is shown an optical engagement of module power connector 200 with backplane power connector 32. Backplane power connector 32 includes optical fibres 260 terminating at optical lenses 262. Module power connector 200 includes optical ports 42, as well as opto-electronic components 264 in optical communication with optical fibres 260. Electronic signals generated by a module controller on the battery module may be received at opto-electronic components 264, converted into optical signals and transmitted to the pack controller via optical fibres 260. A foam gasket 266 separates module power connector 200 from backplane power connector 32.

The battery system of the present disclosure will now be described in use. In a high-voltage battery system (such as the one described in connection with Figures 1-6), the module and backplane power connectors are sometimes subject to overheating. As the module and backplane connectors are coupled in a blind mate engagement, the connectors are generally inaccessible and visual inspection of the connectors is usually not possible. Accordingly, the present disclosure provides for a system and method of determining whether the module and/or backplane connectors are overheating, as will be described below. Other risks to lithium ion batteries include overcharging, over-discharging, and high temperatures in general. To protect against such hazards, it is typical to implement a number of safety-disconnect features, again as will now be described in more detail below.

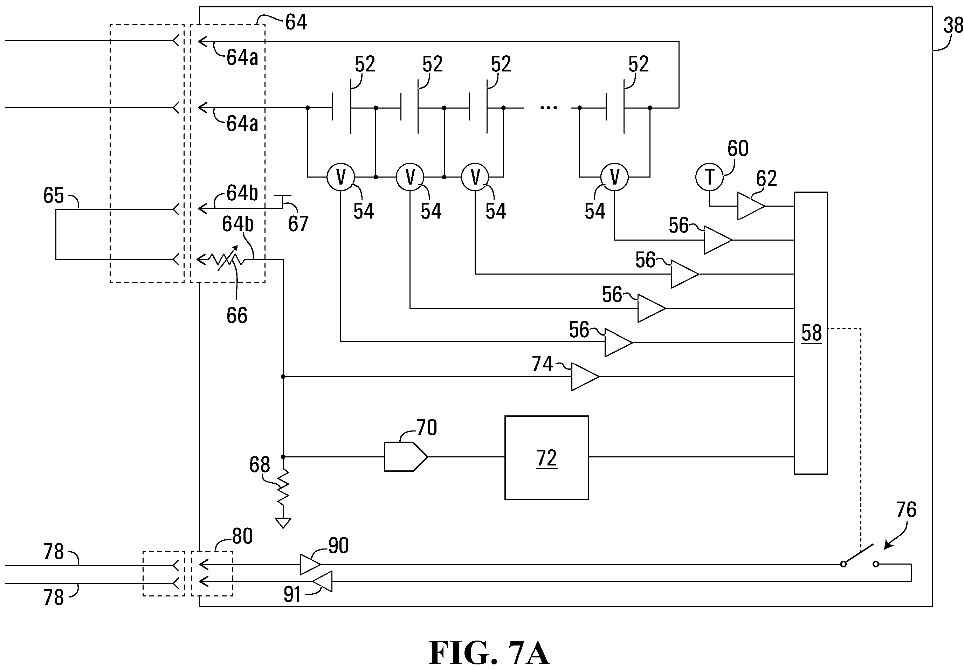

Figure 7A is a circuit diagram of battery module 38, according to an embodiment of the disclosure. Battery module 38 includes a number of serially connected cells 52. Battery module 38 further includes a number of voltage sensors 54 connected to cells 52 and configured to read the voltage of each cell 52. The outputs of voltage sensors 54 are directed to comparators 56. The outputs of comparators 56 are connected to a logic block 58 that asserts its output if any of the outputs of comparators 56 is asserted. For example, logic block 58 may comprise one or more logical OR-gates and/or logical AND-gates. Battery module 38 further includes a temperature sensor 60 used to measure an ambient temperature of battery module 38. For example, temperature sensor 60 may be positioned so as to monitor the temperature of one or more of cells 52. Battery module 38 may include one or more further temperature sensors (not shown) for measuring the temperature at different locations within battery module 38. The output of temperature sensor 60 is directed to comparator 62, whose output in turn is fed to logic block 58.

A thermistor 66 (for example one of thermistors 204 in Figure 4A) is integrated within module power connector 64 (shown with dashed lines), which includes module terminals 64a and High Voltage Interlock Loop (HVIL) terminals 64b. Module power connector 64 may be the same as module power connector 200 described above, but for the purpose of Figures 7A-8 is labelled differently. Physically, thermistor 66 is electrically coupled to HVIL terminals 64b. Thermistor 66 is positioned to detect changes in temperature of module power connector 64. As known in the art, the resistance of thermistor 66 will vary with the sensed temperature of module power connector 64. Therefore, as the temperature of module power connector 64 varies, so too does the electrical resistance of thermistor 66.

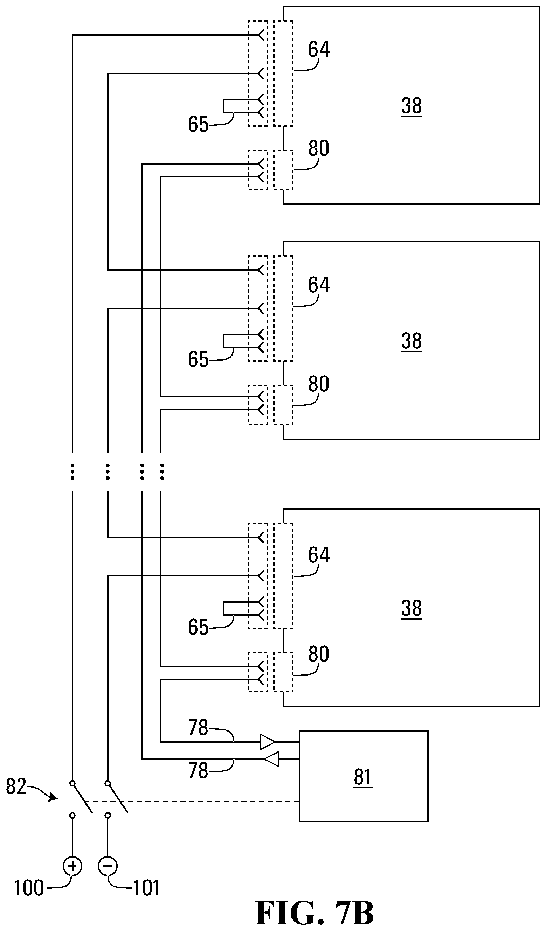

Thermistor 66 is connected to pull-down resistor 68, together forming a voltage divider circuit. An analog-to-digital converter (ADC) 70 measures the voltage at the voltage divider circuit. The voltage measured by ADC 70 will vary as a function of the resistance at thermistor 66, resulting in a voltage change measured by ADC 70. A programmable logic device 72, such as a microcontroller, is used to convert the voltage measured by ADC 70 into a temperature. The output of programmable logic device 72 is configured to communicate directly with a pack controller 81 (see Figure 7B) over a battery management system communication link (not shown). In an alternative embodiment (as shown in Figure 7A), the output of programmable logic device 72 may be configured to communicate with logic block 81. Logic block 58 is configured to control a switching device 76, such as a relay, a transistor, or an AND-gate, operable to alternately open or close a safety-disconnect loop 78.

Figure 7B is a circuit diagram of a number of battery modules 38 connected in series to pack controller 81 and switching device 82. Safety-disconnect loop 78 comprises a continuous signal path that passes through all of battery modules 38 that are connected to pack controller 81. If the switching device 76 of any battery module 38 interrupts (that is, opens) safety disconnect loop 78, then pack controller 81 is configured to open switching device 82 thereby preventing further charging or discharging of battery modules 38. Safety-disconnect loop 78 comprises an optical communication medium such as optical fibres (for example optical fibres 260 described above) that terminate at a module optical communication connector 80. The optical signal carried by safety-disconnect loop 78 is converted to an electronic signal at an opto-electronic receiver 90. The output of opto-electronic receiver 90 passes through switching device 76 and into opto-electronic transmitter 91 that is operable to convert the electric signal into an optical signal. Opto-electronic receiver 90 may be, for example, a photo-transistor or a photo-diode. Opto-electronic transmitter 91 may be, for example, a light-emitting diode or a laser.

Together, the above-described components embody a number of safety-disconnect features which can be used to interrupt the flow of power to/from battery module 38 should any one of a number of safety parameters not be met. In particular, during operation, the voltage across the battery pack terminals 100, 101 can typically be up to 1200 Volts. With such a high voltage, it would be dangerous to disconnect battery module 38 from the battery pack while the battery string (i.e. the remaining battery modules in the pack) remains connected to the main DC bus, because bus voltage would be exposed on the backplane connectors. Still further, as mentioned above, overheating of the module/backplane connectors, overcharging/over-discharging of the battery module, and high operating temperatures are all conditions under which it is unsafe to operate the battery module. To prevent such an unsafe occurrence, safety-disconnect loop 78 is used to automatically disconnect the battery system from the DC bus as soon as an unsafe condition is detected.

In order to avoid overheating of battery module 38 (for example in the case of a thermal runaway event, as known in the art), the output of temperature sensor 60 is compared to a preset temperature threshold in comparator 62. Comparator 62 will output a digital signal to logic block 58 if the measured temperature is greater than the preset temperature threshold. The digital signal received at logic block 58 will trigger logic block 58 to operate switching device 76, thereby opening safety-disconnect loop 78.

Opening safety-disconnect loop 78 will cause pack controller 81 to determine a safety-disconnect condition has been met, and will result in pack controller 81 operating switching device 82 to disconnect battery module 38 from the DC bus. Thus, further overheating of battery module 38 may be prevented.

Similarly, in order to avoid overcharging/overdischarging of battery module 38, the outputs of voltage sensors 54 are compared to preset voltage thresholds in comparators 56. A comparator 56 will output a digital signal to logic block 58 if the voltage measured by its respective voltage sensor 54 is greater than the preset voltage threshold. The digital signal received at logic block 58 will trigger logic block 58 to operate switching device 76, thereby opening safety-disconnect loop 78. As described above, opening safety-disconnect loop 78 will result in pack controller 81 determining that a safety-disconnect condition has been met. In response, pack controller 81 will operate switching device 82 to interrupt power flow to/from battery module 50, thereby preventing further overcharging/overdischarging. Comparators 56 are configured so that if the voltage of a cell 52 exceeds an allowable upper threshold (for example 4.20V for lithium ion NMC cells) then their output signal is asserted. Comparators 56 may also be configured so that if the voltage of a cell 52 falls below an allowable lower threshold (for example 2.70V for lithium ion NMC cells) then their output signal is asserted.

Safety-disconnect loop 78 is also used to interrupt power flow to/from battery module 50 in the event that battery module 50 is disconnected from the backplane. To implement this feature, a voltage supply 67 provides voltage to High Voltage Interlock Loop (HVIL) terminals 64b. When battery module 38 is engaged to the backplane, HVIL terminals 64b are connected to voltage supply 67 and the voltage is returned by an HVIL jumper 65. Current then passes from voltage supply 67, through HVIL jumper 65 and through thermistor 66 and pull-down resistor 68. Thermistor 66 and pull-down resistor 68 form a voltage divider. The resistance value of pull-down resistor 68 is selected so that the voltage input at a comparator 74 is measurably above zero. When battery module 38 is disengaged from the backplane, HVIL terminals 64b disconnect from HVIL jumper 65 so that there is no current through the voltage divider, and pull-down resistor 68 holds the voltage at comparator 74 to be zero. Comparator 74 is designed so that a low voltage asserts the output to logic block 58 whereas a high voltage de-asserts the output. Thus, when battery module 38 is disengaged from the backplane, the voltage at comparator 74 is lowered (representing an "unsafe state") and a digital signal is sent to logic block 58, triggering switching device 76 which results in interruption of power to/from battery module 38 as described above. Conversely, when battery module 38 is engaged with the backplane, the voltage input at comparator 74 is raised (representing a "safe state"), and comparator 74 no longer asserts an output to logic block 58.

In order to detect overheating of module power connector 64, safety-disconnect loop 78 may also be opened through the use of thermistor 66. In particular, as described above, ADC 70 measures the voltage at the voltage divider circuit created by thermistor 66 and pull-down resistor 68. Programmable logic device 72 converts the voltage measured by ADC 70 into a temperature which is compared to a preset temperature threshold stored within programmable logic device 72. A digital output is asserted to logic block 58 if the measured temperature exceeds the preset temperature threshold. The temperature threshold may be set so as to ensure that the operation of module power connector 64 remains within a safe operational temperature range for the materials of which it (and other parts of the battery pack that are in thermal contact with it) is comprised. As a non-limiting example, a module connector composed in part of plastic may have a safe operational temperature below 100 degrees C, and the preset temperature threshold may therefore be set to 90 degrees C. Any other suitable temperature threshold is contemplated within the scope of this disclosure.

The digital signal received at logic block 58 will trigger logic block 58 to operate switching device 76, thereby opening safety-disconnect loop 78. As described above, opening safety-disconnect loop 78 will result in pack controller 81 determining that a safety-disconnect condition has been met. In response, pack controller 81 operates switching device 82 to disconnect the string of battery modules 38 from the DC bus. In particular, by operating switching device 82, power flow to/from battery modules 38 via module terminals 64a is prevented. Thus, overheating of module power connector 64 may be prevented.

In an alternative embodiment, programmable logic device 72 transmits the temperature value via a battery management system communications link (not shown) directly to pack controller 81, without going via safety-disconnect loop 78. The communication will cause pack controller 81 to determine a safety-disconnect condition has been met, and will result in pack controller 81 operating switching device 82 to disconnect battery module 38 from the DC bus. Thus, further overheating of battery module 38 may be prevented. In this embodiment, there is no need to rely on programmable logic device 72 to determine whether the measured temperature exceeds the preset temperature threshold (programmable logic device 72 may comprise software which is generally more failure-prone than hardware comprised in pack controller 81). Rather, the functionality of programmable logic device 72 may be carried out in pack controller 81.

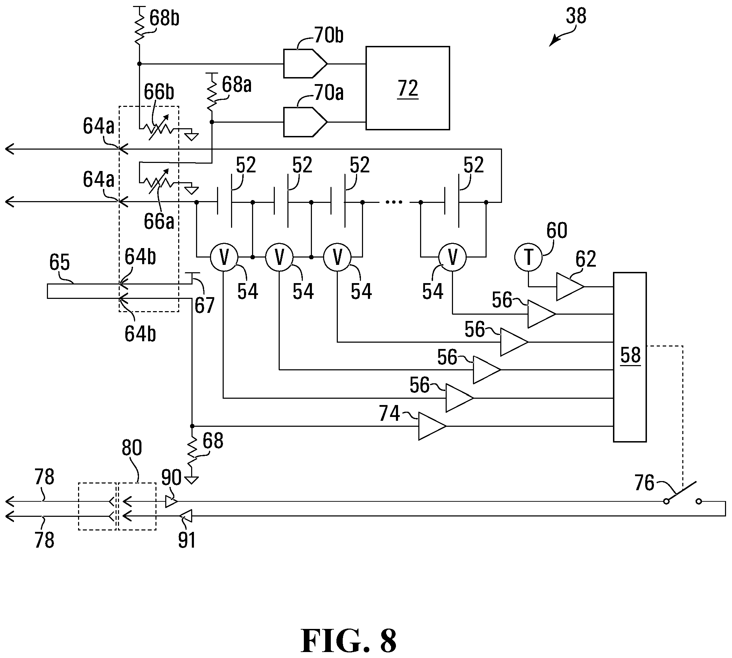

An alternative embodiment of battery module 38 is shown in Figure 8. In this embodiment, a pair of thermistors 66a and 66b are electrically coupled to module terminals 64a, as opposed to HVIL terminals 64b. The operation of the circuit of Figure 8 is otherwise identical to that of Figure 7A. However, rather than communicating directly with logic block 58, as described above programmable device logic 72 transmits the temperature value received from either ADC 70a, 70b via a battery management system communications link (not shown) directly to pack controller 81 , without going via safety-disconnect loop 78. Pack controller 81 then determines whether a safety-disconnect condition has been met.

In a further alternative embodiment (not shown), thermistor 66 may be integrated with HVIL jumper 65 comprised in the backplane power connector. In other words, thermistor 66 may be located on, within or otherwise within thermally conductive distance of the backplane power connector, and may be electrically coupled to HVIL jumper 65. Thermistor 66 will therefore be responsive to changes in temperature of the backplane power connector, and will result in switching device 76 being operated should the temperature of the backplane power connector increase beyond a preset threshold, as described above.

It should be noted that battery module 38 of Figure 8 forms part of a series connection of multiple battery modules 38 (such as shown in Figure 7B). Furthermore, operation of switching device 82 will result in other battery modules 38 in the series string being disconnected from the DC bus. Thus, should one battery module experience a safety-critical issue (i.e. overheating/overvoltage etc.), then all battery modules in the series string will be disconnected from the DC bus.

It is contemplated that any part of any aspect or embodiment discussed in this specification can be implemented or combined with any part of any other aspect or embodiment discussed in this specification. For example, as opposed to a single thermistor, multiple thermistors in series may be used.

## Claims

1. A battery system comprising:
a backplane (28) for engaging with one or more battery modules (38), the backplane comprising one or more backplane optical communication connectors;
one or more battery modules (38) each comprising a module optical communication connector (42), and each being configured to engage with the backplane by moving the battery module into engagement with the backplane such that the module optical communication connector engages with a corresponding backplane optical communication connector (33) in a blind mate engagement; and
one or more optical fibres (260) terminating at the one or more backplane optical communication connectors.

2. The battery system of claim 1, wherein
the battery module (38) comprises a module controller configured to communicate with a pack controller (81) over a safety-disconnect loop (78) comprising the one or more optical fibers (260).

3. The battery system of claim 1 or 2, wherein engagement of the one or more battery modules (38) with the backplane (28) comprises the one or more battery modules being positioned relative to the backplane such that one or more module optical ports in each module optical communication connector (33) are located within optically communicative distance of corresponding backplane optical ports in the corresponding backplane optical communication connector (33).

4. The battery system of any one of claims 1-3, wherein each battery module (38) further comprises a module power connector (200) configured to engage with the backplane (28) by moving the battery module into engagement with the backplane such that the module power connector engages with a corresponding backplane power connector (32) in the backplane, each battery module further comprising one or more temperature-sensitive electronic components positioned within thermally conductive distance of, and configured to detect a change in temperature of, either, or both of, the module power connector and the corresponding backplane power connector, and optionally
wherein the one or more temperature-sensitive electronic components comprise one or more thermistors.

5. The battery system of claim 4, wherein:
at least some of the one or more temperature-sensitive electronic components (66) are positioned on the module power connector (200), or
at least some of the one or more temperature-sensitive electronic components are positioned on the corresponding backplane power connector (32).

6. The battery system of any of claims 4 or 5, wherein the module power connector (200) and the corresponding backplane power connector (32) are inaccessible when the battery module (38) is engaged with the backplane (28).

7. The battery system of claim 4 when dependent from claim 2, further comprising a power switching device for interrupting power flow between the backplane (28) and the one or more battery modules (38), the pack controller (81) being configured, when a safety-disconnect condition is determined by the pack controller to be satisfied, to operate the switching device so as to interrupt power flow between the backplane and the one or more battery modules.

8. The battery system of claim 7, wherein the module controller is configured to determine a power connector temperature of the module power connector (200) and/or the backplane power connector (32), based on a change in temperature detected by the one or more temperature-sensitive electronic components, and optionally
wherein the one or more temperature-sensitive electronic components comprise one or more thermistors, and the module controller being further configured to determine the power connector temperature based on an electrical resistance of the one or more thermistors.

9. The battery system of claim 7 or 8, wherein the pack controller (81) is configured to determine the safety-disconnect condition has been satisfied if the power connector temperature is determined to exceed a preset temperature threshold .

10. The battery system of any of claims 8 or 9, wherein the module controller is further configured to open the safety-disconnect loop (78) if the power connector temperature is determined to exceed the preset temperature threshold, thereby preventing the module controller from communicating with the pack controller (81), the safety disconnect condition being satisfied when the module controller is no longer communicating with the pack controller, and optionally
wherein the module controller is determined to no longer be communicating with the pack controller (81) when the pack controller determines that the module controller has not communicated with the pack controller over the safety-disconnect loop (78) for a predetermined amount of time.

11. The battery system of claim 10, wherein the module controller is further configured to open the safety-disconnect loop (78) if:
a voltage of one or more cells in the battery module (38) is determined to exceed a preset voltage threshold, the voltage being measured by a sensor electrically coupled to the module controller;
a cell temperature of one or more cells in the battery module (38) is determined to exceed a preset cell temperature threshold, the cell temperature being measured by a sensor electrically coupled to the module controller; or
an ambient temperature of the battery module (38) is determined to exceed a preset ambient temperature threshold, the ambient temperature being measured by a sensor electrically coupled to the module controller.

12. The battery system of any one of claims 10 and 11, wherein the module power connector (200) comprises module contacts and interlock contacts, the interlock contacts being electrically coupled to the module controller and corresponding interlock contacts in the corresponding backplane power connector (32) when the battery module (38) is engaged with the backplane (28), the module controller being further configured to open the safety-disconnect loop (78) in response to the battery module being disengaged from the backplane, and optionally
wherein the corresponding backplane power connector (32) comprises a jumper positioned such that, when the battery module (38) is engaged with the backplane, the jumper is electrically coupled to the interlock contacts, and, when the battery module is disengaged from the backplane (28), the jumper is disconnected from the interlock contacts, the module controller being further configured to open the safety-disconnect loop based on an electrical resistance across the interlock contacts, and optionally
wherein the one or more temperature-sensitive electronic components are:
comprised in the module power connector and electrically coupled to the interlock contacts;
comprised in the module power connector and electrically coupled to the module contacts; or
comprised in the corresponding backplane power connector and electrically coupled to the jumper.

13. The battery system of any one of claims 4-12, wherein the one or more backplane power connectors (32) are movably coupled to the backplane (28), and optionally
wherein the backplane further comprises a plurality of flexible busbars interconnecting adjacent backplane power connectors.

14. The battery system of any one of claims 10-13, wherein the pack controller (81) is further configured to:
send over the safety-disconnect loop (78) a sleep instruction to the module controller if a required power flow to/from the battery module (38) is determined to be below a preset power flow threshold; and
send over the safety-disconnect loop (78) a wake-up instruction to the module controller if a required power flow to/from the battery module (38) is determined to be above a preset power flow threshold,
the module controller being further configured to:
operate in a low-power mode in response to receiving the sleep instruction; and operate in a normal mode in response to receiving the wake-up instruction.

## Patentansprüche

1. Batteriesystem, umfassend:
eine Rückwandplatine (28) zum Eingreifen mit einem oder mehreren Batteriemodulen (38), die Rückwandplatine umfassend einen oder mehrere optische Rückwandplatinen-Kommunikationsverbinder;
ein oder mehrere Batteriemodule (38), jeweils umfassend einen optischen Modulkommunikationsverbinder (42) und die jeweils konfiguriert sind, um mit der Rückwandplatine einzugreifen, indem das Batteriemodul in Eingriff mit der Rückwandplatine bewegt wird, sodass der optische Modulkommunikationsverbinder mit einem entsprechenden optischen Rückwandplatinen-Kommunikationsverbinder (33) in einem Blindsteckeingriff ist; und
eine oder mehrere optische Fasern (260), die an dem einen oder den mehreren optischen Rückwandplatinen-Kommunikationsverbinder enden.

2. Batteriesystem nach Anspruch 1, wobei
das Batteriemodul (38) eine Modulsteuerung umfasst, die konfiguriert ist, um über eine Sicherheitstrennschleife (78), die die eine oder die mehreren optischen Fasern (260) umfasst, mit einer Packungssteuerung (81) zu kommunizieren.

3. Batteriesystem nach Anspruch 1 oder 2, wobei ein Eingriff des einen oder der mehreren Batteriemodule (38) mit der Rückwandplatine (28) umfasst, dass das eine oder die mehreren Batteriemodule in Bezug auf die Rückwandplatine derart positioniert sind, dass sich ein oder mehrere optische Modulanschlüsse in jedem optischen Modulkommunikationsverbinder (33) innerhalb eines optisch kommunikativen Abstands von entsprechenden optischen Rückwandplatinenanschlüssen in dem entsprechenden optischen Rückwandplatinen-Kommunikationsverbinder (33) befinden.

4. Batteriesystem nach einem der Ansprüche 1-3, wobei jedes Batteriemodul (38) ferner einen Modulstromverbinder (200) umfasst, der konfiguriert ist, um mit der Rückwandplatine (28) einzugreifen, indem das Batteriemodul in Eingriff mit der Rückwandplatine bewegt wird, sodass der Modulstromverbinder mit einem entsprechenden Rückwandplatinen-Stromverbinder (32) in der Rückwandplatine eingreift, wobei jedes Batteriemodul ferner eine oder mehrere temperaturempfindliche elektronische Komponenten umfasst, die in wärmeleitendem Abstand von dem Modulstromverbinder und/oder dem entsprechenden Rückwandplatinen-Stromverbinder positioniert und konfiguriert sind, um eine Temperaturänderung von einem oder beiden von dem Modulstromverbinder und dem entsprechenden Rückwandplatinen-Stromverbinder zu erfassen, und optional
wobei die eine oder die mehreren temperaturempfindlichen elektronischen Komponenten einen oder mehrere Thermistoren umfassen.

5. Batteriesystem nach Anspruch 4, wobei
zumindest einige von der einen oder den mehreren temperaturempfindlichen elektronischen Komponenten (66) an dem Modulstromverbinder (200) positioniert sind, oder
zumindest einige von der einen oder den mehreren temperaturempfindlichen elektronischen Komponenten an dem entsprechenden Rückwandplatinen-Stromverbinder (32) positioniert sind.

6. Batteriesystem nach einem der Ansprüche 4 oder 5, wobei der Modulstromverbinder (200) und der entsprechende Rückwandplatinen-Stromverbinder (32) nicht zugreifbar sind, wenn das Batteriemodul (38) mit der Rückwandplatine (28) eingreift.

7. Batteriesystem nach Anspruch 4, wenn abhängig von Anspruch 2, ferner umfassend eine Stromschaltvorrichtung zum Unterbrechen eines Stroms zwischen der Rückwandplatine (28) und dem einen oder den mehreren Batteriemodulen (38), wobei die Packungssteuerung (81) konfiguriert ist, um die Schaltvorrichtung zu betätigen, um den Stromfluss zwischen der Rückwandplatine und dem einen oder den mehreren Batteriemodulen zu unterbrechen, wenn durch die Packungssteuerung bestimmt wird, dass eine Sicherheitstrennbedingung erfüllt ist.

8. Batteriesystem nach Anspruch 7, wobei die Modulsteuerung konfiguriert ist, um eine Stromverbindertemperatur des Modulstromverbinders (200) und/oder des Rückwandplatinen-Stromverbinders (32) basierend auf einer Temperaturänderung zu bestimmen, die von der einen oder den mehreren temperaturempfindlichen elektronischen Komponenten erfasst wird, und optional
wobei die eine oder die mehreren temperaturempfindlichen elektronischen Komponenten einen oder mehrere Thermistoren umfassen und die Modulsteuerung ferner konfiguriert ist, um die Stromverbindertemperatur basierend auf einem elektrischen Widerstands des einen oder der mehreren Thermistoren zu bestimmen.

9. Batteriesystem nach Anspruch 7 oder 8, wobei die Packungssteuerung (81) konfiguriert ist, um zu bestimmen, dass die Sicherheitstrennbedingung erfüllt worden ist, wenn bestimmt wird, dass die Stromverbindertemperatur einen voreingestellten Temperaturschwellenwert überschreitet.

10. Batteriesystem nach einem der Ansprüche 8 oder 9, wobei die Modulsteuerung ferner konfiguriert ist, um die Sicherheitstrennschleife (78) zu öffnen, wenn bestimmt wird, dass die Stromverbindertemperatur den voreingestellten Temperaturschwellenwert überschreitet, wodurch verhindert wird, dass die Modulsteuerung mit der Packsteuerung (81) kommuniziert, wobei die Sicherheitstrennbedingung erfüllt ist, wenn die Modulsteuerung nicht mehr mit der Packsteuerung kommuniziert, und optional
wobei bestimmt wird, dass die Modulsteuerung nicht mehr mit der Packungssteuerung (81) kommuniziert, wenn die Packungssteuerung bestimmt, dass die Modulsteuerung über eine vorbestimmte Zeitdauer nicht mehr über die Sicherheitstrennschleife (78) mit der Packungssteuerung kommuniziert hat.

11. Batteriesystem nach Anspruch 10, wobei die Modulsteuerung ferner konfiguriert ist, um die Sicherheitstrennschleife (78) zu öffnen, wenn:
bestimmt wird, dass eine Spannung von einer oder mehreren Zellen in dem Batteriemodul (38) einen voreingestellten Spannungsschwellenwert überschreitet, wobei die Spannung durch einen Sensor gemessen wird, der elektrisch mit der Modulsteuerung gekoppelt ist;
bestimmt wird, dass eine Zelltemperatur von einer oder mehreren Zellen in dem Batteriemodul (38) einen voreingestellten Zelltemperaturschwellenwert überschreitet, wobei die Zelltemperatur durch einen Sensor gemessen wird, der elektrisch mit der Modulsteuerung gekoppelt ist; oder
bestimmt wird, dass eine Umgebungstemperatur des Batteriemoduls (38) einen voreingestellten Umgebungstemperaturschwellenwert zu überschreitet, wobei die Umgebungstemperatur durch einen Sensor gemessen wird, der elektrisch mit der Modulsteuerung gekoppelt ist.

12. Batteriesystem nach einem der Ansprüche 10 und 11, wobei der Modulstromverbinder (200) Modulkontakte und Verriegelungskontakte umfasst, wobei die Verriegelungskontakte elektrisch mit der Modulsteuerung und entsprechenden Verriegelungskontakten in dem entsprechenden Rückwandplatinen-Stromverbinder (32) gekoppelt sind, wenn das Batteriemodul (38) mit der Backplane (28) in Eingriff ist, wobei die Modulsteuerung ferner konfiguriert ist, um die Sicherheitstrennschleife (78) als Reaktion auf ein Trennen des Batteriemoduls von der Rückwandplatine zu öffnen, und optional
wobei der entsprechende Rückwandplatinen-Stromverbinder (32) eine Steckbrücke umfasst, die positioniert ist, sodass, wenn das Batteriemodul (38) mit der Backplane in Eingriff ist, der Steckbrücke elektrisch mit den Verriegelungskontakten gekoppelt ist, und, wenn das Batteriemodul von der Rückwandplatine (28) gelöst ist, die Steckbrücke von den Verriegelungskontakten getrennt ist, wobei die Modulsteuerung ferner konfiguriert ist, um die Sicherheitstrennschleife basierend auf einem elektrischen Widerstand über die Verriegelungskontakte zu öffnen, und optional
wobei die eine oder die mehreren temperaturempfindlichen elektronischen Komponenten wie folgt sind:
Enthalten in dem Modulleistungsverbinder und elektrisch gekoppelt mit den Verriegelungskontakten;
Enthalten in dem Modulleistungsverbinder und elektrisch gekoppelt mit den Modulkontakten; oder
Enthalten in dem entsprechenden Rückwandplatinen-Stromverbinder und elektrisch gekoppelt mit der Steckbrücke.

13. Batteriesystem nach einem der Ansprüche 4-12, wobei der eine
oder die mehreren Rückwandplatinen-Stromverbinder (32) beweglich mit der Rückwandplatine (28) gekoppelt sind, und optional
wobei die Rückwandplatine ferner eine Vielzahl von flexiblen Sammelschienen umfasst, die benachbarte Rückwandplatinen-Stromverbinder miteinander verbinden.

14. Batteriesystem nach einem der Ansprüche 10-13, wobei die Packungssteuerung (81) ferner zu Folgendem konfiguriert ist:
Senden, über die Sicherheitstrennschleife (78), einer Schlafanweisung an die Modulsteuerung, wenn bestimmt wird, dass ein erforderlicher Stromfluss zu/von dem Batteriemodul (38) unter einem voreingestellten Stromflussschwellenwert ist; und
Senden, über die Sicherheitstrennschleife (78), einer Aufweckanweisung an die Modulsteuerung, wenn bestimmt wird, dass ein erforderlicher Stromfluss zu/von dem Batteriemodul (38) über einem voreingestellten Stromflussschwellenwert ist, wobei der Modulsteuerung ferner zu Folgendem konfiguriert ist:
als Reaktion auf ein Empfangen der Schlafanweisung, Betrieb in einem Niederstrommodus; und
als Reaktion auf ein Empfangen der Aufweckanweisung, Betrieb in einem Normalmodus.

## Revendications

1. Système de batterie, comprenant :
un fond de panier (28) destiné à venir en prise avec un ou plusieurs modules de batterie (38), le fond de panier comprenant un ou plusieurs connecteurs de communication optique de fond de panier ;
un ou plusieurs modules de batterie (38) comprenant chacun un connecteur de communication optique (42) de module, et chacun étant configuré pour venir en prise avec le fond de panier en déplaçant le module de batterie pour le mettre en prise avec le fond de panier de sorte que le connecteur de communication optique de module vienne en prise avec un connecteur de communication optique (33) de fond de panier correspondant en prise par accouplement en aveugle ; et
une ou plusieurs fibres optiques (260) se terminant au niveau des un ou plusieurs connecteurs de communication optique de fond de panier.

2. Système de batterie selon la revendication 1, dans lequel : le module de batterie (38) comprend un dispositif de commande de module configuré pour communiquer avec un dispositif de commande de bloc (81) sur une boucle de déconnexion de sécurité (78) comprenant les une ou plusieurs fibres optiques (260).

3. Système de batterie selon la revendication 1 ou 2, dans lequel la mise en prise des un ou plusieurs modules de batterie (38) avec le fond de panier (28) comprend les un ou plusieurs modules de batterie étant positionnés par rapport au fond de panier de telle sorte qu'un ou plusieurs ports optiques de module dans chaque connecteur de communication optique (33) de module soient situés à distance de communication optique de ports optiques de fond de panier correspondants dans le connecteur de communication optique (33) de fond de panier correspondant.

4. Système de batterie selon l'une quelconque des revendications 1-3, dans lequel chaque module de batterie (38) comprend en outre un connecteur d'alimentation (200) de module configuré pour venir en prise avec le fond de panier (28) en déplaçant le module de batterie pour le mettre en prise avec le fond de panier de telle sorte que le connecteur d'alimentation de module vienne en prise avec un connecteur d'alimentation (32) de fond de panier correspondant dans le fond de panier, chaque module de batterie comprenant en outre un ou plusieurs composants électroniques sensibles à la température positionnés à distance thermiquement conductrice, et configurés pour détecter un changement de température de l'un et/ou l'autre, du connecteur d'alimentation de module et du connecteur d'alimentation de fond de panier correspondant, et éventuellement
dans lequel les un ou plusieurs composants électroniques sensibles à la température comprennent une ou plusieurs thermistances.

5. Système de batterie selon la revendication 4, dans lequel :
au moins certains des un ou plusieurs composants électroniques sensibles à la température (66) sont positionnés sur le connecteur d'alimentation (200) de module, ou
au moins certains des un ou plusieurs composants électroniques sensibles à la température sont positionnés sur le connecteur d'alimentation (32) de fond de panier correspondant.

6. Système de batterie selon l'une quelconque des revendications 4 ou 5, dans lequel le connecteur d'alimentation (200) de module et le connecteur d'alimentation (32) de fond de panier correspondant sont inaccessibles lorsque le module de batterie (38) est en prise avec le fond de panier (28).

7. Système de batterie selon la revendication 4, lorsqu'elle dépend de la revendication 2, comprenant en outre un dispositif de commutation d'alimentation pour interrompre le flux de puissance entre le fond de panier (28) et les un ou plusieurs modules de batterie (38), le dispositif de commande de bloc (81) étant configuré, lorsqu'il est déterminé par le dispositif de commande de bloc qu'une condition de déconnexion de sécurité est satisfaite, pour actionner le dispositif de commutation de manière à interrompre le flux de puissance entre le fond de panier et les un ou plusieurs modules de batterie.

8. Système de batterie selon la revendication 7, dans lequel le dispositif de commande de module est configuré pour déterminer une température de connecteur d'alimentation du connecteur d'alimentation (200) de module et/ou du connecteur d'alimentation (32) de fond de panier, sur la base d'un changement de température détecté par les un ou plusieurs composants électroniques sensibles à la température, et éventuellement
dans lequel les un ou plusieurs composants électroniques sensibles à la température comprennent une ou plusieurs thermistances, et le dispositif de commande de module étant en outre configuré pour déterminer la température du connecteur d'alimentation sur la base d'une résistance électrique des une ou plusieurs thermistances.

9. Système de batterie selon la revendication 7 ou 8, dans lequel le dispositif de commande de bloc (81) est configuré pour déterminer que la condition de déconnexion de sécurité a été satisfaite s'il est déterminé que la température de connecteur d'alimentation dépasse un seuil de température prédéfini.

10. Système de batterie selon l'une quelconque des revendications 8 ou 9, dans lequel le dispositif de commande de module est en outre configuré pour ouvrir la boucle de déconnexion de sécurité (78) s'il est déterminé que la température de connecteur d'alimentation dépasse le seuil de température prédéfini, empêchant ainsi le dispositif de commande de module de communiquer avec le dispositif de commande de bloc (81), la condition de déconnexion de sécurité étant satisfaite lorsque le dispositif de commande de module ne communique plus avec le dispositif de commande de bloc, et éventuellement
dans lequel il est déterminé que le dispositif de commande de module ne communique plus avec le dispositif de commande de bloc (81) lorsque le dispositif de commande de bloc détermine que le dispositif de commande de module n'a pas communiqué avec le dispositif de commande de bloc sur la boucle de déconnexion de sécurité (78) pendant une durée prédéterminée.

11. Système de batterie selon la revendication 10, dans lequel le dispositif de commande de module est en outre configuré pour ouvrir la boucle de déconnexion de sécurité (78) si :
il est déterminé qu'une tension d'un ou plusieurs éléments dans le module de batterie (38) dépasse un seuil de tension prédéfini, la tension étant mesurée par un capteur couplé électriquement au dispositif de commande de module ;
il est déterminé qu'une température d'élément d'un ou plusieurs éléments dans le module de batterie (38) dépasse un seuil de température d'élément prédéfini, la température d'élément étant mesurée par un capteur couplé électriquement au dispositif de commande de module ; ou
il est déterminé qu'une température ambiante du module de batterie (38) dépasse un seuil de température ambiante prédéfini, la température ambiante étant mesurée par un capteur couplé électriquement au dispositif de commande de module.

12. Système de batterie selon l'une quelconque des revendications 10 et 11, dans lequel le connecteur d'alimentation (200) de module comprend des contacts de module et des contacts de verrouillage, les contacts de verrouillage étant couplés électriquement au dispositif de commande de module et aux contacts de verrouillage correspondants dans le connecteur d'alimentation (32) de fond de panier correspondant lorsque le module de batterie (38) est en prise avec le fond de panier (28), le dispositif de commande de module étant en outre configuré pour ouvrir la boucle de déconnexion de sécurité (78) en réponse à la désolidarisation du module de batterie du fond de panier, et éventuellement
dans lequel le connecteur d'alimentation (32) de fond de panier correspondant comprend un cavalier positionné de sorte que, lorsque le module de batterie (38) est en prise avec le fond de panier, le cavalier soit couplé électriquement aux contacts de verrouillage, et, lorsque le module de batterie est désolidarisé du fond de panier (28), le cavalier soit déconnecté des contacts de verrouillage, le dispositif de commande de module étant en outre configuré pour ouvrir la boucle de déconnexion de sécurité sur la base d'une résistance électrique à travers les contacts de verrouillage, et éventuellement
dans lequel les un ou plusieurs composants électroniques sensibles à la température sont :
compris dans le connecteur d'alimentation de module et couplés électriquement aux contacts de verrouillage ;
compris dans le connecteur d'alimentation de module et couplés électriquement aux contacts du module ; ou
compris dans le connecteur d'alimentation de fond de panier correspondant et couplés électriquement au cavalier.

13. Système de batterie selon l'une quelconque des revendications 4-12, dans lequel les un ou plusieurs connecteurs d'alimentation (32) de fond de panier sont couplés de manière mobile au fond de panier (28), et éventuellement
dans lequel le fond de panier comprend en outre une pluralité de barres omnibus flexibles connectant entre eux des connecteurs d'alimentation de fond de panier adjacents.

14. Système de batterie selon l'une quelconque des revendications 10-13, dans lequel le dispositif de commande de bloc (81) est en outre configuré pour :
envoyer sur la boucle de déconnexion de sécurité (78) une instruction de veille au dispositif de commande de module s'il est déterminé qu'un flux de puissance requis vers/depuis le module de batterie (38) est inférieur à un seuil de flux de puissance prédéfini ; et
envoyer sur la boucle de déconnexion de sécurité (78) une instruction de réveil au dispositif de commande de module s'il est déterminé qu'un flux de puissance requis vers/depuis le module de batterie (38) est supérieur à un seuil de flux de puissance prédéfini,
le dispositif de commande de module étant en outre configuré pour :
fonctionner en mode basse puissance en réponse à la réception de l'instruction de veille ; et
fonctionner en mode normal en réponse à la réception de l'instruction de réveil.
